# DEMANDE DE BREVET EUROPEEN

(11) **EP 4 686 408 A1**
(43) Date de publication de la demande: **04.02.2026**
(21) Numéro de dépôt: 25193018.6
(22) Date de dépôt: 31.07.2025
(51) Int. Cl.: A01N 63/10, A01N 63/20, A01N 63/22, A01N 65/03, A01P 21/00, C05F 3/00, C05F 11/08, A01N 61/00, A01N 63/00

(54) **BIOSTIMULANT LIQUIDE POUR LA CROISSANCE VÉGÉTALE**

(30) Priorité: 31.07.2024 FR 2408504
(71) Demandeur: Veragrow, 27100 Val-de-Reuil (FR)
(72) Inventeur: SAINT MARTIN, Théo, 27100 VAL-DE-REUIL (FR); GOTTE, Maxime, 27100 VAL-DE-REUIL (FR)
(74) Mandataire: Ex Materia

(57) **Abrégé**

La présente invention concerne un biostimulant liquide comprenant au moins un pourcentage massique de substances humiques compris entre 5% et 15%, un pourcentage massique d'extrait d'au moins une algue compris entre 2% et 20%, un pourcentage massique d'au moins une épice compris entre 0,1% et 5%, un pourcentage massique de guano compris entre 0,05% et 10% et de l'extrait de lombricompost comprenant au moins une souche de bactérie du genre Bacillus, au moins une souche de bactérie du genre Azotobacter et au moins une souche de bactérie du genre Rhizobium.

## Description

La présente invention concerne un biostimulant utilisé comme agent stimulant de la croissance végétale notamment dans l'agriculture. La présente invention concerne plus particulièrement un tel biostimulant obtenu à partir de lombricompost.

Les biostimulants sont des intrants couramment utilisés, notamment dans l'agriculture dite « conventionnelle » et dans l'agriculture dite « biologique », pour améliorer la qualité et les rendements des cultures. Aujourd'hui, dans un contexte de développement de nouvelles méthodes de production, de nouveaux intrants sont recherchés pour favoriser les rendements des cultures tout en améliorant la qualité des sols et leur biodiversité à partir d'intrants répondant notamment aux critères d'agriculture biologique tout en assurant des rendements optimaux.

Certains intrants existants permettent d'apporter aux cultures les éléments minéraux nécessaires à leur croissance. Toutefois, de tels produits ne répondent pas à l'ensemble des contraintes auxquelles sont soumises les plantes. En effet, de tels intrants ne sont pas aptes à assurer, notamment, une protection fongique, une protection contre le stress hydrique, la favorisation de symbioses entre des micro-organismes et les plantes ou encore de rendre disponibles les éléments minéraux naturellement présents dans le sol.

Il en résulte que les exploitants agricoles doivent multiplier les intrants ainsi que les épandages pour offrir à leurs cultures les meilleures conditions de développement afin de favoriser à la fois les rendements et la biodiversité de leurs parcelles.

La présente invention s'inscrit dans ce contexte et se propose de pallier au moins certains inconvénients de l'art antérieur. La présente invention se propose notamment de fournir un biostimulant liquide pour tout type d'agriculture, mais aussi conforme aux exigences de l'agriculture biologique et permettant de répondre efficacement aux différentes contraintes que subissent les plantes durant leur croissance.

Ainsi, la présente invention porte sur un biostimulant liquide comprenant au moins un pourcentage massique de substances humiques compris entre 5% et 15%, un pourcentage massique d'extrait d'au moins une algue compris entre 2% et 20%, un pourcentage massique d'au moins une épice compris entre 0,1% et 5%, un pourcentage massique de guano compris entre 0,05% et 10% et un extrait de lombricompost comprenant au moins une souche de bactérie du genre Bacillus, au moins une souche de bactérie du genre Azotobacter et au moins une souche de bactérie du genre Rhizobium.

Le biostimulant est adapté pour accroitre la biomasse microbienne du sol. D'une part, par l'apport de polysaccharides complexes et d'acides aminés issus notamment de l'extrait d'au moins une algue. D'autre part, par l'apport de biomasse microbienne issue de l'extrait de lombricompost. Il est à noter que l'apport de polysaccharides complexes et d'acides aminés peut également provenir, en complément de l'extrait d'au moins une algue, d'extraits de plantes.

Cette composition permet de faciliter la formation de symbioses entre la plante et des micro-organismes, de dégrader et de minéraliser efficacement de la matière organique et/ou de solubiliser des nutriments confinés dans le sol.

En outre, les micro-organismes présents dans le biostimulant liquide participent à augmenter la biomasse de la base de la chaine alimentaire. Cet accroissement de la biomasse des premiers maillons de la chaîne alimentaire contribue à augmenter la biomasse des maillons plus tardifs, à titre d'exemple illustratif et non limitatif de l'invention les animaux fongivores ou encore les animaux insectivores, au niveau de la plante. L'accroissement de la microfaune des maillons plus tardifs permet ainsi d'assurer la régulation de ravageurs et de maladies.

Par ailleurs, la forte teneur en substances humiques issues notamment de l'extrait de lombricompost va avoir une action forte sur les propriétés physicochimiques du sol afin d'optimiser la mobilisation des nutriments du sol, qu'ils soient déjà présents et confinés ou apportés par des programmes de fertilisation.

Par ailleurs, le biostimulant liquide permet de limiter l'impact des stress abiotiques qui surviennent au cours de la culture tels que les sécheresses, fortes chaleurs ou encore les gelées. Ainsi, l'action du biostimulant liquide permet de garantir une récolte qualitative et à haut rendement même sous des contraintes climatiques significatives.

L'application du biostimulant liquide permet également de réaliser des économies de fertilisants en particulier phosphaté et azoté grâce à la présence des substances humiques et des microorganismes bénéfiques du sol.

De plus, le biostimulant liquide présente une capacité significative à induire une meilleure résistance au stress hydrique. Les plantes biostimulées survivent et repartent mieux, notamment grâce à la modulation de l'expression de gènes impliqués dans la gestion du stress hydrique, en particulier ceux impliqués dans le métabolisme de la proline.

En outre, le biostimulant liquide peut de façon préférentielle être utilisé pour l'enrobage de graines. Ainsi, le biostimulant peut être appliqué directement sur les graines qui favorise une germination rapide et une croissance accrue du système racinaire dès la sortie de la radicule par une action sur l'activité enzymatique permettant de mobiliser les ressources de la graine.

Ainsi le taux de levée peut être amélioré d'au moins 6%. De même, la vigueur de la levée est significativement améliorée. En effet, après plantation au moins 30% des graines enrobées par le biostimulant liquide sont élevées en plus par rapport à une graine non-enrobée. De plus, le nombre de tiges et le développement racinaire sont particulièrement accrus par ledit enrobage.

En parallèle de son action directe, dès le semis, le biostimulant liquide se diffuse progressivement dans le sol ce qui va permettre aux substances humiques de déployer leurs actions physico-chimiques préalablement mentionnées. Cette diffusion progressive va également stimuler les micro-organismes présents à proximité de la graine pour maximiser la formation de symbiose avec des bactéries PGPR dès les premiers stades des cultures.

Selon une caractéristique de l'invention, le biostimulant liquide comprend un pourcentage massique d'extrait de lombricompost compris entre 10% et 80%.

Selon une caractéristique de l'invention, le biostimulant liquide comprend un pourcentage massique d'extrait de lombricompost compris entre 40% et 70%.

Selon une caractéristique de l'invention, le pourcentage massique de guano est compris entre 1% et 5%.

Selon une caractéristique de l'invention, le pourcentage massique de substances humiques est compris entre 5% et 15%.

Selon une caractéristique de l'invention, l'extrait d'au moins une algue est obtenu à partir d'algues de la classe des *Phaeophyceae.*

Selon une caractéristique de l'invention, l'extrait d'algue est obtenu à partir d'algues issues de la famille des *Laminariales.*

Selon une caractéristique de l'invention, le pourcentage massique de l'extrait d'au moins une algue est compris entre 2% et 10%.

Selon une caractéristique de l'invention, le biostimulant liquide comprend un pourcentage massique de potassium compris entre 0,1 et 5%.

Selon une caractéristique de l'invention, le biostimulant liquide comprend un pourcentage massique d'azote compris entre 0,05% et 5%.

Selon une caractéristique de l'invention, le biostimulant liquide comprend un pourcentage massique d'acides aminés compris entre 0,05% et 5%.

Selon une caractéristique de l'invention, le biostimulant liquide comprend un pourcentage massique de phosphore compris entre 0,01% et 5%.

Selon une caractéristique de l'invention, l'au moins une épice est obtenue au moins à partir de *Thymus vulgaris liannaeus* et/ou à partir de *Cinnamomum burmanii* et/ou à partir de *Syzygium aromaticum.*

Selon une caractéristique de l'invention, le pourcentage massique de l'au moins une épice est compris entre 0,5% et 2%.

Selon une caractéristique de l'invention, le biostimulant liquide comprend un pourcentage massique de saccharose compris entre 0,1% et 10%.

Selon une caractéristique de l'invention, le biostimulant liquide comprend un pourcentage massique de mélasse compris entre 2% et 15%.

Selon une caractéristique de l'invention, le biostimulant liquide comprend un pourcentage massique de xanthane compris entre 0,05% et 0,2%.

Selon une caractéristique de l'invention, le biostimulant liquide comprend un pourcentage massique de phénylpropanoïdes compris entre 0,05% et 0,5%.

Selon une caractéristique de l'invention, le biostimulant liquide comprend un pourcentage massique de solvant complété à 100%.

Selon une caractéristique de l'invention, le solvant majoritaire est de l'eau.

Selon une caractéristique de l'invention, le biostimulant liquide comprend un pH compris entre 2 et 12.

Selon une caractéristique de l'invention, le biostimulant liquide comprend un pH compris entre 3 et 5.

Selon une autre caractéristique de l'invention, le biostimulant liquide comprend un pH compris entre 6 et 8.

Selon une autre caractéristique de l'invention, le biostimulant liquide comprend un pH compris entre 8 et 12.

L'invention porte également sur l'utilisation d'un biostimulant liquide conforme à au moins l'une des caractéristiques précédemment évoquées pour l'enrobage de semences et/ou de tubercules.

Selon une caractéristique de l'invention, le biostimulant liquide est appliqué dans un dosage compris entre 0,05 et 10 litres par quintal. Il convient de noter que le dosage appliqué du biostimulant liquide est fonction des semences traitées et de leurs caractéristiques relatives notamment à la taille et au poids desdites semences.

D'autres caractéristiques, détails et avantages de l'invention ressortiront plus clairement à la lecture de la description qui suit d'une part, et d'exemples de réalisation donnés à titre indicatif et non limitatif en référence aux dessins schématiques annexés d'autre part, sur lesquels :

[Fig.1] représente schématiquement une vue générale d'une plante opérant des symbioses avec des micro-organismes présents dans le biostimulant liquide de sorte à favoriser l'activité photosynthétique et la captation de nutriments ;

[Fig.2] représente un histogramme témoignant de l'effet du biostimulant liquide selon l'invention sur les rendements d'une culture de blé par rapport à des biostimulants liquides basés respectivement sur l'utilisation d'un extrait de plante et de bactéries PGPR.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment considérer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

Il convient de noter que les pourcentages massiques qui seront évoqués dans la description qui suivra sont à considérer en fonction de la masse totale de biostimulant considéré.

L'invention propose un biostimulant pour assurer une bonne qualité des cultures et des rendements. Le biostimulant selon l'invention peut être utilisé notamment dans la sylviculture, l'horticulture, la viniculture, ou encore l'agriculture et ceux dans l'ensemble des systèmes de production agricole.

Selon un aspect de l'invention, le biostimulant liquide est une composition liquide destinée à être diluée pour être appliquée, par exemple au moyen d'un pulvérisateur, au sol ou sur un support de culture.

Selon une caractéristique préférentielle de l'invention, le biostimulant liquide est appliqué sur des semences et/ou des plants. Ces plants peuvent être des pommes de terre ou encore des oignons.

Selon un autre aspect de l'invention, le biostimulant est une composition liquide destinée à être appliquée pure, c'est-à-dire à une concentration maximale, sur un engrais ou amendement solide ou mélangée à un engrais liquide.

La liquidité de la composition du biostimulant selon l'invention s'apprécie selon la viscosité de ce dernier qui est comprise entre 0,02 et 0,25 Pascal-seconde.

En outre, pour permettre la pulvérisation de la composition par des systèmes de pulvérisation conventionnels notamment mis en œuvre dans l'agriculture, le biostimulant comprend des particules dont la taille est inférieure à 250µm, préférentiellement inférieure à 200µm, plus préférentiellement inférieure à 150µm, encore plus préférentiellement inférieure à 100µm.

Le biostimulant selon l'invention est un produit miscible au moins avec l'eau, préférentiellement le biostimulant selon l'invention est miscible avec toute solution aqueuse homogène. On comprend de ce qui précède que le mélange du biostimulant avec de l'eau permet d'obtenir un produit homogène. Ainsi, le biostimulant selon l'invention peut être pulvérisé sur des cultures par un pulvérisateur, alternativement le biostimulant peut être utilisé dans un système d'irrigation d'une installation de fertirrigation, alternativement le biostimulant peut également être utilisé dans des systèmes de production aéroponiques. Dans ces systèmes de production, la miscibilité du biostimulant permet son utilisation sans risquer d'obstruer les différentes buses de projection utilisées. Par ailleurs, cette miscibilité du biostimulant permet également son utilisation dans des systèmes hydroponiques dans lesquels le biostimulant peut être réparti de façon homogène sur le substrat.

Préférentiellement, le biostimulant liquide est utilisé pour l'enrobage de semences ou de plants. À cet effet, le biostimulant liquide peut être utilisé pur ou dilué, par exemple, dans un tambour dans lequel sont brassés le biostimulant liquide et des semences, ou encore, par application par brumisation sur les semences ou plants circulant sur un convoyeur. On comprend qu'à cet effet, le biostimulant peut être utilisé dans tout autre système de traitement de semences et/ou de plants.

Le biostimulant comprend de l'extrait de lombricompost. Le lombricompost est obtenu par la dégradation de matières organiques traitées par des lombrics. Ce lombricompost, également connu sous les dénominations de compost de vers ou encore d'humus de vers, peut être obtenu à partir de l'une quelconque des espèces de vers de terre appropriées à la formation de lombricompost. Le lombricompost peut notamment être obtenu à partir de l'une quelconque des espèces de lombrics suivantes : *Eisenia fetida, Eisenia andrei, Eisenia hortensis, Eudrilus eugeniae, Lumbricus rubellus.*

Le lombricompost est un élément essentiel du biostimulant, ce lombricompost présente de nombreux effets biostimulants. Cet extrait de lombricompost se caractérise notamment par une forte capacité à améliorer la qualité des sols en augmentant le ratio C/N, en améliorant l'activité enzymatique des sols, particulièrement l'activité des phosphatases permettant de rendre disponibles les phosphates du complexe argilohumique et des uréases permettant de minéraliser l'azote uréique.

Le lombricompost comprend une grande richesse en micro-organismes aptes à générer des symbioses avec notamment le système racinaire des plantes permettant de stimuler la croissance des plantes et d'améliorer la fixation de l'azote de ces plantes. Ces micro-organismes présentent également une activité enzymatique leur permettant de solubiliser les phosphates présents dans le sol et d'améliorer la protection des plantes contre des maladies telluriques.

De plus, le lombricompost présent dans le biostimulant permet de favoriser le développement dans les sols de nématodes fongivores, bactériophages et nématophages ainsi que de champignons mycorhiziens et bactéries PGPR acronyme anglais pour « *Plant Growth Promoting Rhizobacteria* ». Ces micro-organismes se développant suite à l'apport en biostimulant dans le sol améliorent davantage l'action du biostimulant comme stimulateur de fertilité des sols, de réducteur de la sensibilité aux stress abiotiques et biotiques et de stimulateur de croissance.

Le lombricompost précédemment évoqué passe par une étape d'extraction pour obtenir de l'extrait de lombricompost permettant de mettre en solution toutes les caractéristiques du lombricompost précédemment évoquées.

Plus spécifiquement, cet extrait du lombricompost est obtenu par un mélange de 30kg à 150kg de matière brute de lombricompost, c'est-à-dire du lombricompost à l'état solide traité par des lombrics, dans un volume d'eau compris entre 350 litres et 450 litres. De façon préférentielle, l'extraction du lombricompost est obtenue par un mélange de 60kg à 100kg de matière brute de lombricompost dans un volume de 400 litres d'eau. Le mélange du lombricompost dans le volume est réalisé sous agitation vive puis la phase liquide est récupérée et filtrée pour éliminer les particules présentant un diamètre supérieur à 100µm. Cette filtration peut être réalisée, par exemple, par centrifugation, décantation, ou tamisage.

Aussi, selon l'invention, le biostimulant comprend au moins une souche de bactérie du genre Bacillus, au moins une souche de bactérie du genre Azotobacter et au moins une souche de bactérie du genre Rhizobium. Ces bactéries sont utilisées pour leur rôle biostimulateur favorisant le développement des plantes.

Plus spécifiquement, le biostimulant peut notamment comprendre une combinaison de bactéries conforme à l'invention parmi *Azotobacter chroococcum, Azotobacter armeniacus*, *Azotobacter nigricans, Bacillus subtilis, Paenibacillus spp., Pseudomonas fluorescens*, *Pseudomonas sp., Brevibacterium, Mesorhizobium, Lysinibacillus, Bradyrhizobium, Azospirillum sp. Dietzia natronolimnaca*, *Flavobacterium sp., Brevundimonas sp., Rhizobium sp..*

Ces bactéries sont présentes dans le biostimulant dans un état de dormance permettant de limiter fortement l'activité microbienne au sein du biostimulant une fois conditionné. Pour favoriser la mise en dormance des microorganismes, le biostimulant comprend des conservateurs tels que le cinnamaldéhyde. De plus, la dormance des bactéries présentes dans le biostimulant liquide est permise par le maintien du biostimulant liquide à un pH acide. Aussi, selon un mode de réalisation de l'invention, le pH du biostimulant est compris entre 2 et 6, préférentiellement le pH du biostimulant est compris entre 3 et 5, préférentiellement le pH du biostimulant est compris entre 3,5 et 4,5, plus préférentiellement le pH du biostimulant est compris entre 3,8 et 4,3, encore plus préférentiellement le pH du biostimulant est compris entre 4,0 et 4,3.

Un pH du biostimulant compris dans les plages mentionnées permet de limiter la dégradation des composés par les micro-organismes présents dans le biostimulant dans un pH trop acide et de limiter l'activité microbienne dans un pH trop neutre. Plus spécifiquement un pH de 4,0 permet de limiter la dégradation des composés et des micro-organismes présents dans le biostimulant mieux qu'un pH de 3,8 et mieux qu'un pH de 3,5. De plus, un pH de 4,3 permet de limiter l'activité microbienne au sein du biostimulant mieux qu'un pH de 4,5 et mieux qu'un pH de 5. Dès lors, on comprend qu'un compromis doit être trouvé pour limiter l'activité microbienne dans le biostimulant sans dégrader les composés et les micro-organismes présents dans le biostimulant. Aussi, les inventeurs ont pu déterminer qu'un pH compris entre 3,5 et 4,5 et préférentiellement entre 3,8 et 4,3 permet d'obtenir un compromis optimal.

Le pH du biostimulant est maintenu dans les plages souhaitées par un apport en acide citrique dans un pourcentage massique compris 0,1% et 3%, préférentiellement entre 0,5% et 1,5%. Il convient de noter que le pourcentage massique d'acide citrique intégré dans le biostimulant est déterminé de sorte à obtenir un pH d'intérêt du biostimulant conforme à ce qui a été évoqué précédemment. De plus, tout autre acidifiant pourra être utilisé dans des pourcentages massiques optimaux dans l'objectif d'obtenir un pH conforme à ce qui a été précisé précédemment.

Les bactéries ainsi mises en dormance seront activées lors de l'élévation naturelle du pH intervenant lors de l'utilisation du biostimulant, par exemple lors de la dilution du biostimulant dans un volume d'eau à pH neutre avant pulvérisation sur des cultures.

Il est toutefois à noter que dans un mode de réalisation alternatif de l'invention, le pH du biostimulant liquide peut être maintenu à pH neutre, et plus précisément entre 6 et 8. Dans ce mode de réalisation de l'invention, la présence des conservateurs précédemment évoqués permet à elle seule de maintenir en dormance les microorganismes présents dans le biostimulant liquide. L'application d'un tel pH neutre compris entre 6 et 8 permet ainsi de conserver le pouvoir tampon du biostimulant liquide et de limiter la dégradation des microorganismes.

Dans un autre mode de réalisation de l'invention, le pH du biostimulant est maintenu entre 8 et 12. Dans ce mode de réalisation de l'invention, la présence seule des conservateurs permet de maintenir la dormance des microorganismes. De plus, un pH basique de la solution permet de mieux solubiliser notamment les acides humiques et fulviques présents dans le biostimulant liquide. Il est à noter que pour la mise en œuvre de ce mode de réalisation de l'invention, le biostimulant liquide comprend un agent alcalin tel que la cendre, la chaux ou encore la soude caustique.

En outre, le lombricompost comprend de nombreux métabolites secondaires tels que des composés phénoliques favorisant la ramification du système racinaire et assurant une protection contre les stress oxydatifs.

De plus, le lombricompost comprend de nombreuses hormones végétales que l'on retrouve dans l'extrait de lombricompost. Ces hormones végétales sont notamment synthétisées par certaines bactéries présentes dans la microflore des lombrics et notamment des auxines, gibbérellines, cytokinines et des brassinostéroides. L'apport en phytohormones assuré par le biostimulant permet de stimuler efficacement la croissance des plantes, et notamment de favoriser la germination des graines et la croissance végétative. Par ailleurs, une telle présence en phytohormones permet également d'améliorer significativement l'activité photosynthétique et la taille des fruits des plantes. Une telle stimulation des plantes permet ainsi d'améliorer les rendements des cultures biostimulées par le biostimulant conforme à la présente invention.

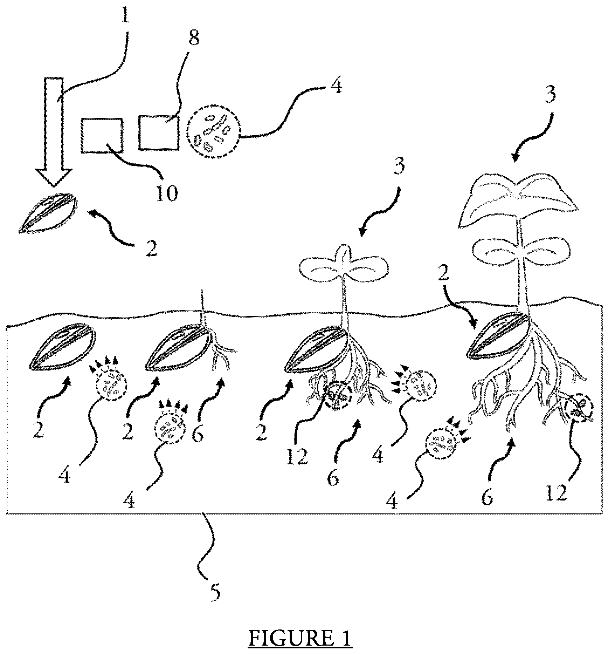

La figure 1 illustre ces actions notamment de l'extrait de lombricompost sur une semence 2. Plus spécifiquement, la figure 1 illustre l'action d'un biostimulant liquide 1 sur une même semence 2 avec l'évolution de ladite semence 2 au cours du temps qui est représentée. Le biostimulant liquide 1 est appliqué en enrobage de la semence 2 avant que cette dernière n'ait été introduite dans un support de culture 5

En effet, l'introduction du biostimulant liquide 1 conforme à la présente invention au niveau de la semence 2 permet d'apporter en premier lieu des éléments stimulant la germination de la semence 2, notamment des phytohormones telles que des gibbérellines et des cytokinines issues du lombricompost et présentes dans l'extrait de lombricompost. Ainsi, même lorsque les conditions environnementales et/ou climatiques ne sont pas optimales, le biostimulant liquide 1 favorise la germination de la semence 2.

En second lieu, l'apport de substances humiques 8 et d'un extrait d'au moins une algue 10, tel qu'il sera décrit plus en détail dans la description qui suivra, stimule la croissance de la jeune plantule et un système racinaire 6 de ladite plantule. Cette stimulation permet de renforcer son encrage au sol, ce qui limite les pertes agricoles au démarrage de la culture.

En troisième lieu, cette application en enrobage de la semence 2 apporte la richesse en micro-organismes 4 au plus près de la jeune plante tout juste germée, et plus spécifiquement de son système racinaire 6. Ce dépôt de micro-organismes 4 au plus près de la plante permet de favoriser la formation de symbiose 12 entre ces micro-organismes 4 et le système racinaire 6 naissant de la plante afin d'assurer une biostimulation prolongée.

En effet, ces symbioses 12 associées aux substances humiques 8 favorisent la captation des nutriments dans le sol ce qui permet d'améliorer le système foliaire de la plante lui permettant d'atteindre plus rapidement les stades de développement moins sensibles aux stress et pathogènes, c'est-à-dire à partir de 2-4 feuilles.

En outre, ces symbioses 12 favorisent la captation des nutriments dans le sol ce qui permet d'améliorer le système foliaire de la plante et donc son activité photosynthétique.

Par ailleurs, l'extrait d'au moins une algue 10 comprend des laminaranes qui stimulent la croissance de la plante et améliorent significativement les défenses immunitaire de la plante.

Cet accroissement de la qualité des cultures est permis par une meilleure germination des semences, notamment au moyen des phytohormones du lombricompost, par un meilleur ancrage de la plante permis par la stimulation du système racinaire, par les substances humiques et les polysaccharides complexes provenant de l'extrait d'algue, et par une biodisponibilité des nutriments accrue ce qui a pour effet direct de réduire les besoins de fertilisation au moyen d'une diffusion progressive des substances humiques et une présence en micro-organismes bénéfiques. Ces éléments du biostimulant liquide 1 permettent d'obtenir des cultures plus vigoureuses, nécessitant moins d'intrants de synthèse, c'est-à-dire des fertilisants et produits phytosanitaires, et un rendement final plus haut. Cette amélioration du rendement final étant permise notamment par un plus grand nombre de plantes à l'hectare grâce à la meilleure germination. Ainsi, l'utilisation du biostimulant liquide 1 permet d'accroitre la qualité des cultures biostimulées, telle qu'il sera visible en lien avec les résultats d'essais présentés dans la description qui suivra.

Selon un mode de réalisation de l'invention, le biostimulant comprend un pourcentage massique d'extrait de lombricompost compris entre 10% et 80%, préférentiellement entre 20% et 80%, plus préférentiellement entre 30% et 80%, plus préférentiellement entre 30% et 70%, plus préférentiellement entre 30% et 60%, encore plus préférentiellement entre 40% et 50%.

L'extrait de lombricompost est obtenu par l'extraction des composés et de molécules d'intérêt du lombricompost résultant de la dégradation de la matière organique par les lombrics. Ce lombricompost est une matière solide qui n'est pas compatible avec un épandage par pulvérisation d'un produit liquide. On comprend de ce qui précède que l'extraction de lombricompost permet de conserver les composés et éléments d'intérêt du lombricompost tout en permettant, par exemple, la pulvérisation de cet extrait de lombricompost.

Plus spécifiquement, l'extrait de lombricompost est obtenu par l'extraction d'un pourcentage massique de lombricompost à l'état solide compris entre 2% et 40%, préférentiellement entre 10% et 30%, plus préférentiellement entre 10% et 20% dans un volume d'eau complété à 100%.

Dans les plages de pourcentage massique de lombricompost utilisé pour obtenir l'extrait de lombricompost décrit précédemment, l'extraction des composés d'intérêt présents dans la matière brute traitée par les lombrics est optimale. En effet, plus la teneur en matière brute est importante et plus la teneur en composés d'intérêt ou en micro-organismes dans l'extrait de lombricompost est importante. Toutefois, les inventeurs ont pu mettre en évidence qu'au-delà de 40% de lombricompost utilisé pour obtenir l'extrait de lombricompost, l'extraction n'est pas optimale et de nombreux composés d'intérêt ne sont pas extraits. Cependant, dans des teneurs trop faibles et plus précisément inférieures à 2%, la teneur en composés d'intérêt dans l'extrait de lombricompost est trop faible limitant son efficacité.

Aussi, on comprend qu'un compromis entre la qualité de l'extraction réalisée et la teneur en composés d'intérêt doit être trouvé. Les inventeurs ont pu déterminer que ce compromis optimal est atteint dans un pourcentage massique d'extrait de lombricompost compris entre 5% et 30%, et préférentiellement entre 10% et 30%.

En outre, l'extrait de lombricompost comprend de hautes teneurs en substances humiques, et en particulier en acides humiques et en acides fulviques. Les substances humiques, telles qu'elles sont documentées notamment par Rose et al. 2014 «A Meta-Analysis and Review of Plant-Growth Response to Humic Substances» et Nardi et al. 2021 « Chemical Structure and Biological Activity ofHumic Substances Define Their Role as Plant Growth Promoters »*,* améliorent significativement la biodisponibilité des macro et micronutriments par leur capacité à chélater les minéraux. De plus, leurs formes chimiques complexes offrent une forte capacité à tamponner le pH du sol et à former des agrégats contribuant à améliorer la structure physique et physicochimique du sol. Outre leur action sur le sol limitant l'occurrence des stress hydriques et salins, les substances humiques activent les systèmes enzymatiques antioxydants permettant d'augmenter la résistance des plantes à ces mêmes stress.

Par ailleurs, les substances humiques ont également une action de type hormonale stimulant la croissance, notamment racinaire. Cette action a été mise en avant par Rose et al. 2014 particulièrement sur les substances humiques issues de lombricompost. L'origine de cette action est généralement attribuée à leurs formes complexes qui permettent d'enfermer au sein de ces grandes molécules des plus petites telles que les phytohormones (Canellas et al., 2002, 2015; Wong et al., 2020). Aussi, les substances humiques provenant du lombricompost sont formées en présence de phytohormones et parviennent à les enfermer au sein de leurs structures moléculaires. Ces substances humiques améliorent donc significativement l'efficacité du biostimulant.

Aussi, selon l'invention, le biostimulant comprend un pourcentage massique de substances humiques compris entre 2% et 20%, préférentiellement le biostimulant comprend un pourcentage massique de substances humiques compris entre 5% et 15%, plus préférentiellement le biostimulant comprend un pourcentage massique de substances humiques compris entre 6% et 10%. Il est à noter que ces pourcentages massiques de substances humiques sont obtenus conformément à la méthode d'analyse RD 1110/1991 (BOE 170 17/07/1991 Mét 4).

Plus spécifiquement, ces substances humiques comprennent des acides humiques favorisant notamment la disponibilité des nutriments et des acides fulviques favorisant l'assimilation des nutriments. Les acides humiques peuvent représenter entre 0,1% et 5% du pourcentage massique du biostimulant liquide et les acides fulviques peuvent représenter entre 1,9% et 15% du pourcentage massique du biostimulant liquide. De façon préférentielle, les acides humiques représentent entre 0,5% et 2% du pourcentage massique du biostimulant liquide. De façon préférentielle, les acides fulviques représentent entre 3% et 10% du pourcentage massique du biostimulant liquide.

Les inventeurs ont pu déterminer qu'une teneur trop importante en substances humiques dans le biostimulant augmente la possibilité de précipitation de particules au sein du biostimulant. De plus, une teneur en substances humiques trop importante augmente le ratio C/N des sols ce qui limite la disponibilité et l'assimilation de l'azote par les plantes.

Dans certains modes de réalisation, le pourcentage massique d'acide humique est égal au pourcentage massique d'acide fulvique à plus ou moins 1%. Dans d'autres modes de réalisation, le pourcentage massique d'acide fulvique est supérieur au pourcentage d'acide humique d'au moins 2%.

Les résultats présentés ci-dessous en lien avec le tableau 1 permettent de mettre en évidence l'impact de l'utilisation du biostimulant liquide, conforme à la présente invention, sur une culture de maïs par rapport à un témoin appartenant à la même culture et sur lequel aucun intrant n'a été apporté.

**[Tableau 1]**

| | Biostimulant | Témoin | Évolution Biostimulant/Témoin |
|---|---|---|---|
| Dosage (L/q) | 0,5 | 0 | - |
| Taux de levée | 96,9% | 89,9% | +7% |
| Biomasse aérienne (g) | 0,97 | 0,39 | +85% |
| Biomasse racinaire (g) | 21 | 11,5 | +146% |
| Rendement ensilage (tMS/ha) | 21,3 | 19,9 | +7% |
| Rendement (q/ha) | 106 | 99,1 | +7% |

Les résultats d'essais tels que représentés par le tableau 1 ont été obtenus par l'application du biostimulant liquide selon l'invention par enrobage de semence dans un dosage de 0,5 litre par quintal de semence.

Il est particulièrement remarquable sur le tableau 1 que les semences enrobées par le biostimulant liquide dans le dosage évoqué précédemment permettent d'obtenir un taux de levée 7,3% supérieur à des semences analogues n'ayant pas été enrobées par le biostimulant liquide. Il est à noter que ces résultats ont été obtenus sans protection des semences par traitement anti-fongique conventionnel utilisé contre la fonte des semis.

De plus, l'application du biostimulant liquide pour l'enrobage des semences de maïs a permis d'augmenter significativement la biomasse aérienne des plantes issues des semences enrobées de 85% par rapport au témoin et la biomasse racinaire de 146%. Ainsi, le biostimulant liquide a permis un ancrage plus important de la plante dans le sol.

En outre, l'ensemble de ces augmentations a également permis d'augmenter le rendement ensilage du maïs de 1,4 tonne de matière sèche par hectare (tMS/ha) et le rendement de 6,9 quintaux par hectare (q/ha). Les inventeurs ont pu constater que l'augmentation de ces rendements est obtenue par l'application du biostimulant liquide en enrobage de semences qui a favorisé le diamètre des tiges du maïs permettant un meilleur développement aérien ainsi qu'un nombre d'épis par hectare impactant ainsi le rendement.

Les résultats présentés ci-dessous en lien avec le tableau 2 permettent de mettre en évidence l'impact de l'utilisation du biostimulant liquide, conforme à la présente invention, sur différentes cultures de la pomme de terre par rapport à un témoin appartenant à la même culture et sur lequel aucun intrant n'a été apporté.

**[Tableau 2]**

| Variété | | Dosage (L/t) | Nombre de tubercules par hectare | Nombre de tubercules par plant | Rendement (t/ha) |
|---|---|---|---|---|---|
| César | Biostimulant | 1 | - | - | 73 |
| | Témoin | 0 | - | - | 68 |
| Agria | Biostimulant | 1 | 517000 | - | - |
| | Témoin | 0 | 498000 | - | - |
| Marabel | Biostimulant | 1 | - | - | 76,6 |
| | Témoin | 0 | - | - | 74,2 |
| Colomba | Biostimulant | 1 | - | 8,5 | 34 |
| | Témoin | 0 | - | 8,2 | 29 |
| Innovator | Biostimulant | 1 | - | 8,3 | 46 |
| | Témoin | 0 | | 7,6 | 45 |
| Fontane | Biostimulant | 1 | - | - | 52,2 |
| | Témoin | 0 | - | - | 51,1 |

Les essais réalisés sur des cultures de la pomme de terre ont permis de mettre en évidence que l'application du biostimulant liquide pour l'enrobage des tubercules à un dosage de 1 litre par tonne (L/t) a accéléré significativement la croissance des plants avec +51% d'émergence 33 jours après plantation par rapport à un témoin issu de la même culture et pour lequel aucun enrobage n'a été réalisé. Cette accélération de la croissance des plants a permis de favoriser l'enracinement des plants, les rendant ainsi plus résilients face aux différents stress futurs.

En outre, l'utilisation du biostimulant liquide tel qu'évoqué précédemment sur la variété César a permis d'augmenter les rendements de production de 5 tonnes par hectare et d'augmenter le calibre des tubercules. Plus spécifiquement, l'utilisation du biostimulant liquide a permis d'augmenter le calibre des tubercules dans la plage < 55 mm de 15%.

Dans la variété Agria, le nombre de tubercules par hectare a quant à lui augmenté de 3,7% par rapport au témoin, ce critère étant particulièrement recherché par les producteurs. Aussi, pour les variétés Colomba et Innovator, l'utilisation du biostimulant liquide a permis d'augmenter le nombre de tubercules par plant de respectivement 0,3 et 0,7 par rapport à leur témoin respectif, participant également à améliorer le nombre de tubercules par hectare récoltés par le producteur.

Finalement, en termes de rendement de production, les inventeurs ont constaté l'effet bénéfique de l'utilisation du biostimulant qui a permis pour les variétés Marabel, Colomba, Innovator et Fontane d'augmenter les rendements de production par rapport à leur témoin propre de respectivement 3%, 4%, 9% et 2%. Ainsi, les inventeurs ont pu démontrer que l'utilisation du biostimulant liquide permet d'augmenter le bénéfice net attendu par le producteur.

Les résultats présentés ci-dessous en lien avec le tableau 3 permettent de mettre en évidence l'impact de l'utilisation du biostimulant liquide, conforme à la présente invention, sur une culture de soja par rapport à un témoin appartenant à la même culture et sur lequel aucun intrant n'a été apporté.

**[Tableau 3]**

| Variété | | Dosage (L/q) | Rendement (q/ha) | Nombre de nodosité par plante | Hauteur des plantes (cm) |
|---|---|---|---|---|---|
| Isidor | Biostimulant | 0,7 | 19,8 | 27,8 | 97,5 |
| | Témoin | 0 | 17,7 | 24,8 | 86,1 |

Les essais réalisés sur une culture de soja de la variété Isidor ont permis de mettre en évidence que l'application du biostimulant liquide pour l'enrobage des semences à un dosage de 0,7 litre par quintal (L/q) permet de favoriser la croissance de la plante de 13%, d'augmenter le nombre de fleurs de 14% et le nombre de gousses de 15%. Par ailleurs, en plus de son impact sur le développement aérien, le biostimulant liquide a permis de favoriser le nombre de nodosités de 12% sur le système racinaire. L'ensemble de ces effets ont ainsi permis d'augmenter le rendement en grain de 2,1 quintaux par hectare (q/ha) soit une augmentation de 12% par rapport au témoin.

Selon un aspect de l'invention, le biostimulant comprend un pourcentage massique d'extrait d'au moins une algue compris entre 2% et 20%, préférentiellement compris 2% et 15%, plus préférentiellement le biostimulant comprend un pourcentage massique d'au moins une algue compris entre 2% et 10%. Les inventeurs ont pu mettre en évidence que la présence d'extrait d'au moins une algue dans le biostimulant permet de stimuler la croissance des plantes et également les résistances aux stress hydrique, salin et thermique. De plus, les inventeurs ont également mis en évidence que la présence d'extraits d'algues dans les proportions précédemment définies permet d'améliorer les rendements et la qualité des récoltes.

L'extrait d'au moins une algue dans le biostimulant est riche en polysaccharides complexes aux propriétés biostimulantes. Ainsi, l'extrait d'au moins une algue comprend une combinaison d'au moins un polysaccharide parmi le mannitol, fucoïdanes, carraghénanes, laminarines.

En outre, l'extrait d'au moins une algue permet d'activer des gènes de l'immunité responsables de la synthèse de protéines PR et de composés phénoliques. L'extrait d'au moins une algue permet également d'augmenter le taux de chlorophylle et l'activité photosynthétique des plantes. De plus, une part importante des effets de l'extrait d'au moins une d'algue est attribuée à la présence de phytohormones notamment les auxines, les gibbérellines et les cytokinines venant accroitre la teneur en phytohormones du biostimulant. L'action de ces phytohormones va se traduire, entre autres, par une biomasse aérienne plus importante ainsi qu'un développement accru du système racinaire. Cette augmentation des systèmes racinaire et aérien permet de maximiser le prélèvement d'eau et de nutriments favorisant les rendements des cultures.

Les inventeurs ont tout particulièrement mis en évidence que l'apport de l'extrait d'au moins une algue est tout particulièrement optimisé chez les algues brunes de la classe des *Phaeophyceae.* Plus spécifiquement, selon un aspect de l'invention, l'extrait d'au moins une algue est obtenu à partir d'algues issues de la famille des *Laminariales.* Alternativement ou en combinaison, l'extrait d'au moins une algue peut être obtenu à partir d'algues issues de la famille des *Fucaceae.* À titre d'exemple, l'extrait d'au moins une algue peut être obtenu à partir d'*Ascophyllum nodosum.*

Plus spécifiquement, l'extrait d'au moins une algue comprend entre 15% et 17% de mannitol, entre 4% et 8% de fucoïdane, un pourcentage massique de laminarine supérieur à 20%. Ces valeurs sont exprimées en rapport masse / masse de produit sec, la teneur en matière sèche de l'extrait d'au moins une algue étant comprise entre 7% et 15%. Cet extrait d'algue peut notamment être trouvé sous l'appellation commerciale « ALGANACT^{™} EVP LAM 20 ».

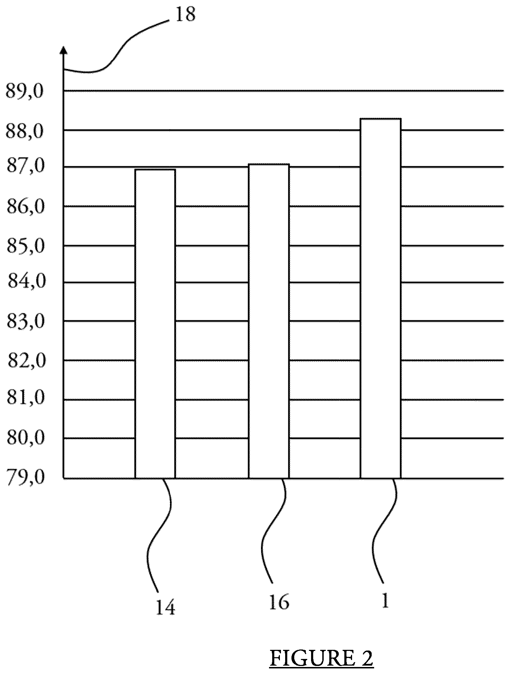

La figure 2 représente des modalités différentes pour un même essai réalisées sur une culture de blé mettant en évidence l'effet du biostimulant liquide 1 conforme à la présente invention par rapport à une première modalité 14 formée d'un biostimulant liquide comprenant seulement des bactéries PGPR et par rapport à une deuxième modalité 16 formée d'un biostimulant liquide comprenant seulement de l'extrait de plante.

Ainsi, cette figure 2 permet de mettre en évidence l'effet du biostimulant liquide sur des rendements 18 en quintaux par hectare de ladite culture de blé. Cette figure 2 permet notamment de mettre en évidence que l'effet du biostimulant liquide 1 sur les rendements 18 de la culture de blé est significativement supérieur aux rendements 18 obtenus par la première modalité 14 et par la deuxième modalité 16. En effet, le biostimulant liquide selon l'invention permet d'augmenter les rendements 18 d'environ 1,6% par rapport à la première modalité 14, c'est-à-dire par rapport à un biostimulant liquide basé sur les bactéries PGPR, et d'augmenter les rendements 18 d'environ 1,5% par rapport à la deuxième modalité 16, c'est-à-dire par rapport à un biostimulant basé sur l'utilisation d'un extrait de plante. Les inventeurs ont notamment pu constater que l'impact du biostimulant liquide 1 selon l'invention sur les rendements 18 de la culture de blé va au-delà de l'effet prédictible et ont constaté une augmentation des rendements supérieure à l'effet bénéfique apporté respectivement par la première modalité 14 et par la deuxième modalité 16. Les inventeurs ont ainsi pu mettre en évidence un effet synergique entre l'utilisation de l'extrait de plante et des bactéries PGPR présentes dans l'extrait de lombricompost.

Dans certains modes de réalisation, le biostimulant comprend une haute teneur en acides aminés provenant de sources végétales et notamment de l'extrait de lombricompost et de l'extrait d'au moins une algue. Ces acides aminés d'origine exogène aux plantes permettent aux plantes de surmonter des situations de stress notamment liées aux périodes de sécheresse et à l'application de désherbant. En effet, leur origine exogène apporte aux plantes des acides aminés directement convertibles en protéines sans requérir leur biosynthèse.

Le biostimulant peut ainsi comprendre une combinaison d'acides aminés d'au moins l'un quelconque des acides aminés parmi Alanine, Arginine, Asparagine, Aspartate, Cystéine, Glutamate, Glutamine, Glycine, Histidine, Isoleucine, Leucine, Lysine, Méthionine, Phénylalanine, Proline, Pyrrolysine, Sélénocystéine, Sérine, Thréonine, Tryptophane, Tyrosine, Valine.

Aussi, le biostimulant comprend dans certains modes de réalisation un pourcentage massique d'acides aminés compris entre 0,05% et 5%, préférentiellement compris entre 0,5% et 3%, plus préférentiellement compris entre 1% et 2%.

Les inventeurs ont pu mettre en évidence que ces teneurs en acides aminés permettent de stimuler la nutrition azotée de la plante. De plus, dans ces teneurs, les acides aminés favorisent l'implantation des micro-organismes pour leur permettre une meilleure adaptation dans l'environnement dans lequel se trouve la plante.

En effet, les acides aminés sont une source importante de nutriments pour les micro-organismes des sols permettant alors d'accroitre la biomasse microbienne des sols et par voie de conséquence leurs activités métaboliques, c'est-à-dire la dégradation et la minéralisation de la matière organique, ainsi que leurs activités PGPR.

Il est à noter qu'à l'instar des polysaccharides, les acides aminés sont des sources de nutriments importantes pour les microorganismes du sol.

En outre, le biostimulant liquide comprend selon l'invention un pourcentage massique de guano compris entre 0,05% et 10%, préférentiellement entre 0,5% et 7%, plus préférentiellement entre 1% et 5%.

Ce guano représente de la matière fécale issue notamment de chauve-souris ou d'oiseaux de mer. Les inventeurs ont pu déterminer que la présence de guano dans le biostimulant liquide permet de fournir aux graines, notamment lors de la germination, des niveaux élevés d'azote, de phosphore et de potassium. Cette composition du guano permet ainsi au biostimulant liquide de favoriser la germination des graines, notamment lorsque celles-ci sont enrobées par le biostimulant liquide.

Dans un mode de réalisation de l'invention, le biostimulant liquide comprend entre 10kg et 50kg de guano par 1000 litres de biostimulant liquide, préférentiellement entre 20kg et 40kg de guano par 1000 litres de biostimulant liquide. À titre d'exemple, le guano est du guano de chauve-souris disponible dans le commerce sous la dénomination commerciale « Guanodiff Classic's ».

Dans certains modes de réalisation, le biostimulant comprend un pourcentage massique de potassium compris entre 0,1% et 5%, préférentiellement entre 0,5% et 2%, un pourcentage massique d'azote compris entre 0,05% et 5%, préférentiellement entre 0,1% et 2% et un pourcentage massique de phosphore compris entre 0,01% et 0,5%, préférentiellement entre 0,05% et 0,2%.

Dans certains modes de réalisation, le biostimulant comprend un pourcentage massique de mélasse compris entre 2% et 15%, préférentiellement entre 5% et 13%, plus préférentiellement entre 5% et 10%. Cette mélasse peut être obtenue à partir de betteraves sucrières ou encore à partir de cannes à sucre. Les inventeurs ont pu mettre en évidence que dans ces proportions, l'apport de mélasse permet d'apporter une haute teneur en nutriments et en composés phénoliques sans impacter la solubilité des autres composés lors de la préparation du biostimulant.

L'ajout de mélasse dans le biostimulant permet de valoriser un rebut de la production de sucre qui est très riche en sucres, en minéraux et en composés phénoliques qui ont des propriétés antioxydantes. La mélasse présente dans le biostimulant permet d'améliorer la fertilité des sols et notamment dans le cadre d'une fertilisation organique. De plus, la présence de mélasse dans le biostimulant améliore la croissance racinaire et aérienne des jeunes plantules et tout particulièrement en association avec des bactéries PGPR telles que celles associées au lombricompost auxquelles la mélasse apporte une source importante de nutriments pour leur développement.

En outre, la richesse en sucres et en nutriments présents dans la mélasse stimule la croissance des populations de micro-organismes autour de la semence et des jeunes plantules ce qui favorise les associations symbiotiques précoces pour une stimulation prolongée des cultures.

Le biostimulant peut ainsi comprendre un pourcentage massique de saccharose compris entre 0,1% et 10%, préférentiellement entre 0,3% et 7%, préférentiellement entre 0,5% et 5%, plus préférentiellement entre 1% et 4%.

En outre, le biostimulant liquide comprend selon l'invention un pourcentage massique d'au moins une épice compris entre 0,1% et 5%, préférentiellement le biostimulant liquide comprend un pourcentage massique d'au moins une épice compris entre 0,5% et 2%. Ce pourcentage massique est obtenu en opérant une extraction des épices. Ces épices peuvent être sélectionnées seules ou en combinaison parmi *Thymus vulgaris liannaeus, Cinnamomum burmanii*, *Syzygium aromaticum.*

Plus spécifiquement, l'au moins une épice contenue dans le biostimulant liquide selon l'invention est obtenue par une infusion de ladite au moins une épice lors de l'étape d'extraction du lombricompost. En effet, lors de l'étape d'extraction du lombricompost entre 1,5kg et 35kg de ladite au moins une épice sont introduits dans un volume d'eau conforme à ce qui a été décrit précédemment en même temps que la matière brute de lombricompost. De façon préférentielle, entre 10kg et 20kg de ladite au moins une épice sont introduites dans ledit volume d'eau.

Ces épices renforcent l'action antistress du biostimulant liquide en apportant des phénylpropanoïdes. Par ailleurs, ces phénylpropanoïdes ont un rôle dans la conservation du produit. Ils bloquent les métabolismes microbiens ce qui réduit le développement des microorganismes dans le produit pur. Après dilution avec de l'eau ce blocage s'estompe et les microorganismes retrouvent leur vitalité.

Par ailleurs les phénylpropanoïdes et flavonoïdes comprennent de très nombreux métabolites spécialisés qui influencent un large éventail de processus chez les plantes, notamment le transport de l'auxine, la photoprotection et la protection contre les insectes herbivores. Ils jouent aussi un rôle d'inhibition de la formation des dérivés réactifs de l'oxygène contribuant ainsi à réduire les stress oxydatifs.

De plus, les inventeurs ont pu déterminer que dans ces pourcentages massiques d'épices dans le biostimulant liquide, on s'assure que l'extraction est optimale tout en s'assurant que l'extrait obtenu comprend un maximum de composés d'intérêt.

Dans certains modes de réalisation, le biostimulant comprend un pourcentage massique de phénylpropanoïdes compris entre 0,05% et 0,5%, préférentiellement entre 0,1% et 0,3%. Ces phénylpropanoïdes peuvent comprendre du cinnamaldéhyde.

Dans certains modes de réalisation, le biostimulant comprend un pourcentage massique de gomme xanthane compris entre 0,05% et 0,2%. La gomme xanthane permet de créer un maillage permettant de retenir en suspension les particules et éviter ainsi la sédimentation des particules. Les inventeurs ont pu déterminer que dans ces pourcentages massiques, le xanthane permet de retenir en suspension les particules présentes dans le biostimulant tout en ajustant la viscosité à niveau satisfaisant entre 0,02 Pa.s et 0,25 Pa.s. En outre, les propriétés de la gomme xanthane favorisent l'attachement du produit sur les semences.

La présente invention atteint bien le but qu'elle s'était fixé en proposant un biostimulant liquide conforme aux exigences de l'agriculture et notamment de l'agriculture dite « biologique » permettant de répondre efficacement aux différentes contraintes que subissent les plantes durant leur croissance.

La présente invention ne saurait toutefois se limiter aux modes de réalisation décrits ici et elle s'étend également à tout moyen et toute configuration équivalents ainsi qu'à toute combinaison techniquement opérante de tels moyens.

## Revendications

1. Biostimulant liquide comprenant au moins un pourcentage massique de substances humiques compris entre 5% et 15%, un pourcentage massique d'extrait d'au moins une algue compris entre 2% et 20%, un pourcentage massique d'au moins une épice compris entre 0,1% et 5%, un pourcentage massique de guano compris entre 0,05% et 10% et de l'extrait de lombricompost comprenant au moins une souche de bactérie du genre Bacillus, au moins une souche de bactérie du genre Azotobacter et au moins une souche de bactérie du genre Rhizobium.

2. Biostimulant liquide selon la revendication 1, comprenant un pourcentage massique d'extrait de lombricompost compris entre 10% et 80%.

3. Biostimulant liquide selon l'une quelconque des revendications 1 et 2, comprenant un pourcentage massique d'extrait de lombricompost compris entre 40% et 70%.

4. Biostimulant liquide selon l'une quelconque des revendications 1 à 3, dans lequel le pourcentage massique de guano est compris entre 1% et 5%.

5. Biostimulant liquide selon l'une quelconque des revendications 1 à 4, dans lequel le pourcentage massique de substances humiques est compris entre 5% et 15%.

6. Biostimulant liquide selon l'une quelconque des revendications 1 à 5, dans lequel l'extrait d'au moins une algue est obtenu à partir d'algues de la classe des Phaeophyceae.

7. Biostimulant liquide selon la revendication 6, dans lequel l'extrait d'algue est obtenu à partir d'algues issues de la famille des Laminariales.

8. Biostimulant liquide selon l'une quelconque des revendications 1 à 7, dans lequel le pourcentage massique de l'extrait d'au moins une algue est compris entre 2% et 10%.

9. Biostimulant liquide selon l'une quelconque des revendications 1 à 8, comprenant un pourcentage massique d'acides aminés compris entre 0,05% et 5%.

10. Biostimulant liquide selon l'une quelconque des revendications 1 à 9, dans lequel l'au moins une épice est obtenue au moins à partir de *Thymus vulgaris liannaeus* et/ou à partir de *Cinnamomum burmanii* et/ou à partir de *Syzygium aromaticum.*

11. Biostimulant liquide selon l'une quelconque des revendications 1 à 10, dans lequel le pourcentage massique de l'au moins une épice est compris entre 0,5% et 2%.

12. Biostimulant liquide selon l'une quelconque des revendications 1 à 11, comprenant un pourcentage massique de saccharose compris entre 0,1% et 10%.

13. Biostimulant liquide selon l'une quelconque des revendications 1 à 12, comprenant un pourcentage massique de mélasse compris entre 2% et 15%.

14. Biostimulant liquide selon l'une quelconque des revendications 1 à 13, comprenant un pourcentage massique de xanthane compris entre 0,05% et 0,2%.

15. Utilisation d'un biostimulant liquide selon l'une quelconque des revendications précédentes pour l'enrobage de semences et/ou de tubercules.
